# EUROPÄISCHE PATENTSCHRIFT

(11) **EP 1 540 234 B1**
(45) Veröffentlichungstag und Bekanntmachung des Hinweises auf die Patenterteilung: **13.10.2010**
(21) Anmeldenummer: 03798125.5
(22) Anmeldetag: 25.08.2003
(51) Int. Cl.: F16L 41/10, F16L 15/08, F16L 37/00

(54) **ADAPTER-ZWISCHENRING FÜR EIN EINSCHRAUBTEIL EINES FLUID-STECKSYSTEMS**
ADAPTER-INTERMEDIATE RING FOR A SCREW-IN PART OF A FLUID PLUG SYSTEM
BAGUE INTERMEDIAIRE EN TANT QU'ADAPTATEUR POUR UNE PARTIE VISSEE D'UN SYSTEME A ENFICHAGE POUR FLUIDE

(30) Priorität: 20.09.2002 DE 20214631 U
(43) Veröffentlichungstag der Anmeldung: 15.06.2005
(73) Patentinhaber: Voss Automotive GmbH, 51688 Wipperfürth (DE)
(72) Erfinder: HAGEN, Harald, 51688 Wipperfürth (DE)
(74) Vertreter: Patentanwälte Dr. Solf & Zapf
(86) Internationale Anmeldenummer: PCT/EP2003/009379
(87) Internationale Veröffentlichungsnummer: WO 2004/029499

(56) Entgegenhaltungen:
- EP-B- 0 005 865
- DE-B- 1 094 055
- US-A- 1 672 879
- US-A- 5 240 290
- US-A- 5 433 489

## Beschreibung

Die vorliegende Erfindung betrifft ein Fluid-Stecksystem gemäß dem Oberbegriff des Patentanspruchs 1.

Ein solches, hier angesprochenes Stecksystem ist beispielsweise in der EP 0 005 865 B1, aber auch in mehreren späteren Veröffentlichungen, wie z. B. der EP 0 913 618 A1, beschrieben. Dabei wird das Einschraubteil, das auch als Überwurfschraube bezeichnet werden kann, mit seinem Außengewindeabschnitt in eine Gewindebohrung eines Basis- bzw. Gehäuseteils (beispielsweise eines Druckaggregates) eingesetzt. Die Gewindebohrung ist Teil einer speziellen, sogenannten "Formbohrung", wobei einerseits innerhalb dieser Formbohrung im Anschluß an das Innengewinde eine radiale Stufenfläche gebildet ist, die gemeinsam mit dem Einschraubteil bzw. dessen Stirnseite eine Ringkammer zur Aufnahme eines Halteringelementes bildet. Das Halteringelement dient zum formschlüssigen Verrasten eines in die Durchgangsöffnung des Einschraubteils einzusteckenden Steckerteils, wobei das Steckerteil auch durch Herausschrauben des Einschraubteils gemeinsam mit dem Halteringelement lösbar ist. Andererseits weist die Formbohrung mündungsseitig eine Erweiterung auf, die gemeinsam mit dem flanschartigen Betätigungsansatz (Außensechskant) und der angrenzenden Aufnahmenut des Einschraubteils eine Dichtungskammer zur gekammerten, verpreßten Aufnahme eines Dichtrings bildet. Zudem ist die spezielle Formbohrung bezüglich ihrer Länge bzw. Tiefe so ausgelegt, dass einerseits das Einschraubteil vollständig eingeschraubt und mit dem erforderlichen Drehmoment angezogen werden kann, und dass andererseits auch das Steckerteil vollständig bis in seine verrastete Steckposition ein- bzw. durchgesteckt werden kann, ohne dass es zu einer Kollision mit der Stufenfläche in der Formbohrung kommt.

Nun gibt es in der Praxis auch Anwendungsfälle, wobei ein solches Stecksystem in andere Gewindebohrungen eingesetzt werden soll, beispielsweise in eine sogenannte "Normbohrung" gemäß DIN 3852, Teil 1, Form Y. Solche Normbohrungen weisen einerseits eine mündungsseitig direkt angrenzende Umgebungsfläche ohne Dichtungserweiterung (ohne Kammerkontur) auf, und andererseits sind sie in aller Regel nicht tief genug ausgebildet. Deshalb sind zum Einsatz des beschriebenen Stecksystems bisher spezielle Adapter erforderlich, die einseitig ein Einschraubstück für die Normbohrung und anderseitig einen verlängerten Abschnitt mit der oben beschriebenen Formbohrung aufweisen. Auf der Verbindungsseite zur Normbohrung hin weisen solche Adapter eine axiale Aufnahmekammer für einen (zweiten) Dichtring derart auf, dass dieser Dichtring bei axialer Anlage an der Umgebungsfläche der Normbohrung gekammert wird. Solche Adapter sind aber teuer und führen zu einer nachteilig großen Baulänge der gesamten Anordnung.

Der vorliegenden Erfindung liegt die Aufgabe zugrunde, eine einfache und kostengünstige Möglichkeit zu schaffen, auch beliebige "Normbohrungen" mit einem Stecksystem der beschriebenen Art ausrüsten zu können, ohne dass es dabei zu einer nennenswerten Vergrößerung der Baulänge kommt.

Erfindungsgemäß wird dies gemäß dem Patentanspruch 1 durch einen neuartigen Adapter-Zwischenring erreicht. Vorteilhafte Ausgestaltungsmerkmale sind in den abhängigen Ansprüchen enthalten.

Demnach besteht der erfindungsgemäße, unmittelbar koaxial auf den Außengewindeabschnitt des Einschraubteils aufsetzbare Zwischenring aus zwei axial gegenüberliegenden Ringabschnitten, wobei ein erster Ringabschnitt auf der dem Betätigungsansatz zugewandten Seite eine gemeinsam mit der Aufnahmenut und dem Betätigungsansatz eine erste Dichtungskammer für den in der Aufnahmenut liegenden ersten Dichtring bildende, erste Aufnahme aufweist, und wobei ein zweiter, direkt gegenüberliegend angrenzender Ringabschnitt eine zweite Aufnahme für einen zweiten Dichtring derart aufweist, dass bei Einschrauben des Einschraubteils in eine eine mündungsseitig angrenzende, ebene Umgebungsfläche aufweisende Gewindebohrung (Normbohrung) zwischen der zweiten Aufnahme, der Umgebungsfläche und dem Außengewindeabschnitt eine zweite Dichtungskammer für den zweiten Dichtring gebildet ist. Somit weist der erfindungsgemäße Zwischenring einerseits im Bereich des ersten Ringabschnittes innenseitig praktisch die Dichtring-Kammerkontur der speziellen Formbohrung auf, indem die Dichtring-Aufnahme im Wesentlichen der Erweiterung der Formbohrung entspricht. Andererseits ist auch der zweite Ringabschnitt zur optimalen Kammerung eines zweiten Dichtringes ausgebildet, und zwar vorteilhafterweise auch im Zusammenwirken mit einer beliebigen Normbohrung, indem praktisch die Aufnahme des zweiten Ringabschnittes der Dichtring-Kammerkontur der Dichtungs-Aufnahmekammer bekannter Adapter entspricht.

Erfindungsgemäß wirkt der Zwischenring dabei auch zusätzlich als Distanzring, indem er eine derart in Abhängigkeit von der jeweiligen Gewindebohrung bemessene axiale Länge bzw. Dicke aufweist, dass sowohl einerseits das Einschraubteil - gegebenenfalls zusammen mit daran gehalterten Zusatzteilen, wie insbesondere mit einem Stecker-Halteelement (Halteringelement) - vollständig bis zur notwendigen Verpressung des ersten Dichtringes einschraubbar ist, als auch andererseits ein zugehöriges Steckerteil vollständig bis in eine korrekte Steckposition in bzw. durch die Durchgangsöffnung des Einschraubteils einsteckbar ist. Dabei sollte die Länge/Dicke des Zwischenrings aber auch derart etwa auf einen gerade notwendigen Mindestwert begrenzt werden, dass das Einschraubteil noch mit genügend tragenden Gewindegängen, beispielsweise mit mindestens drei vollständigen Gewindegängen, innerhalb der Gewindebohrung sitzt.

Durch den erfindungsgemäßen Zwischenring erübrigen sich zusätzliche, sehr lange Adapter; vielmehr kann vorteilhafterweise das Einschraubteil des Stecksystems unter Verwendung des einfach und schnell aufzusetzenden Zwischenrings unmittelbar in praktisch beliebige Gewindebohrungen eingesetzt werden. Dadurch vergrößert sich die Baulänge der Anordnung nur unwesentlich um lediglich die Länge bzw. Dicke des Zwischenringes. Der erfindungsgemäße Zwischenring ist zudem im Vergleich zu bekannten, großvolumigen Adaptern sehr viel kostengünstiger, weil er mit viel geringerem Materialaufwand auch einfacher und schneller, insbesondere als einfaches Drehteil z. B. aus Messing, herstellbar ist.

Anhand der Zeichnungen soll im Folgenden die Erfindung beispielhaft genauer erläutert werden. Dabei zeigen jeweils im Längsschnitt:
- Fig. 1: ein mit einem erfindungsgemäßen Zwischenring ausgestattetes Stecksystem im montierten und gesteckten Zustand von Einschraubteil und Steckerteil,
- Fig. 2: das Stecksystem nach Fig. 1 ohne Steckerteil,
- Fig. 3: eine gesonderte, vergrößerte Darstellung des Einschraubteils mit dem erfindungsgemäßen Zwischenring,
- Fig. 4: nur den erfindungsgemäßen Zwischenring gemäß Fig. 3,
- Fig. 5: ein herkömmliches Stecksystem im montierten und gesteckten Zustand analog zu Fig. 1, jedoch ohne den erfindungsgemäßen Zwischenring,
- Fig. 6: eine Ansicht analog zu Fig. 2 in der Anwendung ohne Zwischenring wie in Fig. 5,
- Fig. 7: ein Basisteil mit einer speziell an das Stecksystem angepaßten, sogenannten "Formbohrung",
- Fig. 8: ein Basisteil mit einer sogenannten "Normbohrung" und
- Fig. 9: das Basisteil mit Normbohrung nach Fig. 8 mit eingesetztem Stecksystem ohne Zwischenring (nicht funktionsfähig, nur zur Erläuterung der Problemstellung).

In den verschiedenen Figuren der Zeichnungen sind gleiche Teile stets mit den gleichen Bezugszeichen versehen.

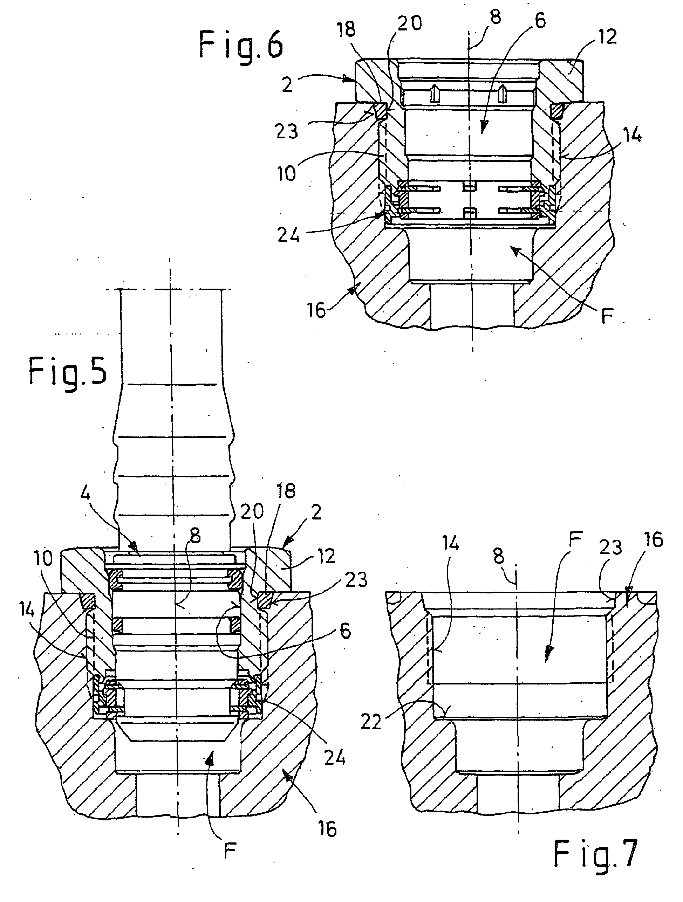

Zunächst soll anhand der Fig. 5 bis 7 das hier angesprochene Stecksystem erläutert werden. Dieses besteht aus einem Einschraubteil 2 (Überwurfschraube) und einem einzusteckenden Steckerteil 4. Das Einschraubteil 2 weist eine Durchgangsöffnung 6 zum Einstecken des Steckerteils 4 in Richtung einer Steckachse 8 auf. Weiterhin weist das Einschraubteil 2 einen hülsenartigen Außengewindeabschnitt 10 mit einem einseitigen, flanschartig vergrößerten, insbesondere als Außensechskant ausgebildeten Betätigungsansatz 12 auf. Das Einschraubteil 2 ist mit dem Außengewindeabschnitt 10 in eine Gewindebohrung 14 eines Basisteils 16 einschraubbar. Zur Abdichtung zwischen dem Einschraubteil 2 und dem Basisteil 16 ist ein Dichtring 18 vorgesehen, der in einer rillenartigen Aufnahmenut 20 liegt, die im Übergang zwischen dem Betätigungsansatz 12 und dem Außengewindeabschnitt 10 gebildet ist. Das Basisteil 16 kann ein praktisch beliebiges Gehäuseteil, beispielsweise eines Druckaggregates, sein.

Im Falle der Ausführung gemäß Fig. 5 bis 7 ist die Gewindebohrung 14 Teil einer sogenannten Formbohrung (F), die unterhalb der Gewindebohrung 14 eine radial nach innen vorspringende Stufenfläche 22 aufweist (siehe Fig. 7). Im Mündungsbereich der Formbohrung F bzw. der Gewindebohrung 14 ist eine etwa konische Erweiterung 23 (Dichtring-Kammerkontur) gebildet, die gemeinsam mit dem Betätigungsansatz 12 und der angrenzenden Aufnahmenut 20 eine Dichtungs-Kammer zur gekammerten, verpressten Aufnahme des Dichtrings 18 bildet. Dabei ist die Formbohrung F derart bemessen, dass im eingeschraubten Zustand des Einschraubteils 2 gemäß Fig. 5 und 6 axial zwischen dem Einschraubteil 2 bzw. dessen Stirnseite und der Stufenfläche 22 eine Ringkammer zur Aufnahme eines Halteringelementes 24 gebildet ist. Zudem ist die Formbohrung F derart in Anpassung an das Stecksystem ausgelegt, dass gemäß Fig. 5 das eingesteckte und über das Halteringelement 24 formschlüssig rastend gegen Lösen arretierte Steckerteil 4 kollisionsfrei innerhalb der Formbohrung F angeordnet ist.

In der bevorzugten Ausführung ist das Halteringelement 24 über Rastmittel an dem Einschraubteil 2 gehalten. Einzelheiten dieser Ausgestaltung des Halteringelementes 24 sind in der oben bereits erwähnten EP 0 913 618 A1 und der korrespondierenden DE 297 19 247 U enthalten; auf diese Veröffentlichungen wird daher an dieser Stelle in vollem Umfange Bezug genommen.

Nun ist es in manchen Anwendungsfällen erwünscht, das beschriebene Stecksystem (Einschraubteil 2 mit Steckerteil 4) auch in anders gestalteten Gewindebohrungen einsetzen zu können.

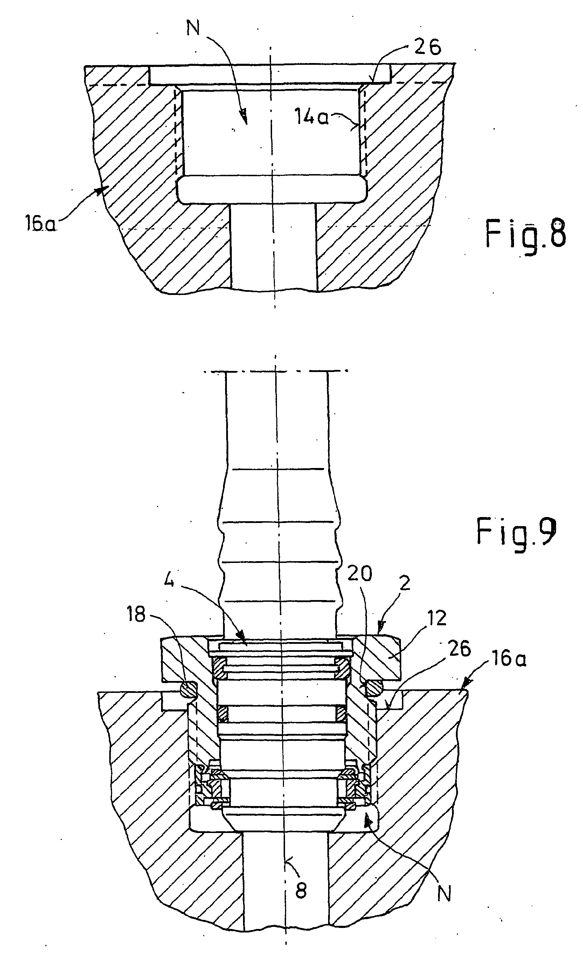

In Fig. 8 und 9 ist beispielhaft ein Basisteil 16a mit einer sogenannten Formbohrung N dargestellt. Dabei kann es sich um eine Ausgestaltung gemäß DIN 3852, Teil 1, Form Y handeln. Wie in Fig. 9 veranschaulicht ist, könnte hierbei einerseits nicht das Einschraubteil 2 vollständig bis in eine abgedichtete Stellung eingeschraubt werden, und andererseits kann nicht das Steckerteil 4 korrekt und kollisionsfrei eingesteckt werden. Die Normbohrung N weist im Unterschied zu der Formbohrung F im mündungsseitigen Bereich der Gewindebohrung 14a keine Kammerkontur für den Dichtring 18 auf, sondern eine mündungsseitige Umgebungsfläche 26, die direkt scharfkantig bzw. über eine geringfügige Anfasung in die Gewindebohrung 14 a übergeht (siehe Fig. 8). In Fig. 8 und 9 ist eine Ausführung veranschaulicht, wobei die Umgebungsfläche 26 als Vertiefung gebildet ist, es kann sich aber gemäß Fig. 8 auch um eine durchgehend ebene Umgebungsfläche 26 handeln, wie dies durch gestrichelte Linien angedeutet ist.

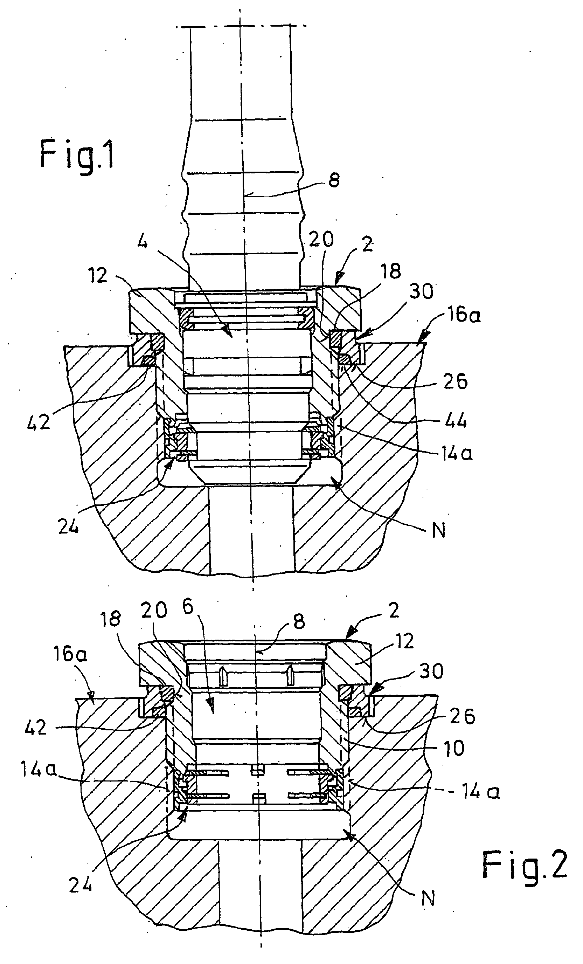

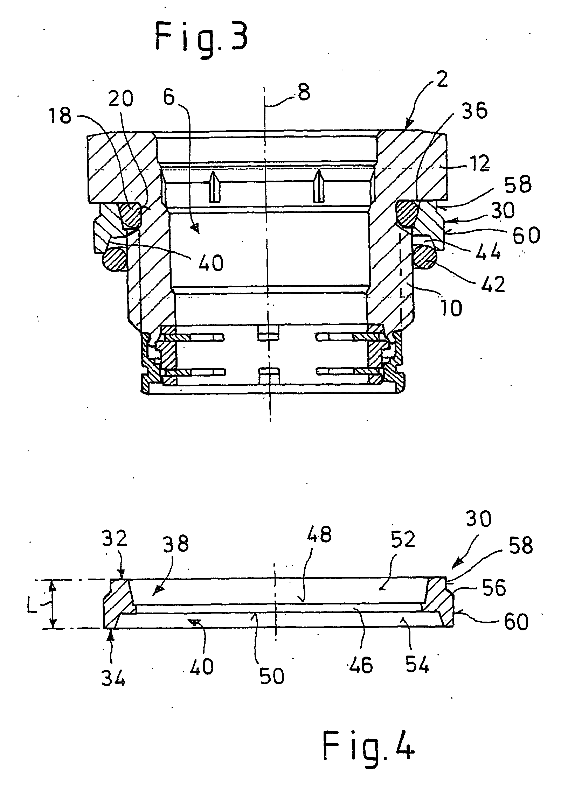

Um nun das Stecksystem mit Einschraubteil 2 und Steckerteil 4 auch in solchen Normbohrungen N einsetzen zu können, ist gemäß Fig. 1 bis 4 erfindungsgemäß ein neuartiger Adapter-Zwischenring 30 vorgesehen. Dieser erfindungsgemäße Zwischenring 30 ist koaxial auf den Außengewindeabschnitt 10 des Einschraubteils 2 aufsetzbar, und er weist zwei axial gegenüberliegende Ringabschitte 32 und 34 auf (siehe insbesondere Fig. 4). Der erste Ringabschnitt 32 bildet auf der dem Betätigungsansatz 12 zugewandten Seite gemeinsam mit der Aufnahmenut 20 und dem Betätigungsansatz 12 eine erste Dichtungskammer 36 für den Dichtring 18, wozu er als Kammerkontur eine sich erweiternde Aufnahme 38 aufweist, die im Wesentlichen der Erweiterung 23 der Formbohrung F entspricht (vgl. Fig. 7). Der gegenüberliegende zweite Ringabschnitt 34 weist eine zweite Aufnahme 40 für einen zweiten Dichtring 42 derart auf, dass bei Einschrauben des Einschraubteils 2 in die Normbohrung N - siehe dazu Fig. 1 und 2 - zwischen der zweiten Aufnahme 40, der Bohrungs-Umgebungsfläche 26 und dem Außengewindeabschnitt 10 eine zweite Dichtungskammer 44 für den zweiten Dichtring 42 gebildet ist. Hierbei sind die beiden Dichtring-Aufnahmen 38 und 40 sowie die zugehörigen Dichtringe 18 und 42 derart ausgelegt, dass im montierten Zustand gemäß Fig. 1 und 2 eine optimale Verpressung beider Dichtringe 18, 42 erreicht wird sowie der zweite Dichtring 42 im Wesentlichen ohne radiale, gegen den Außengewindeabschnitt 10 wirkende Verformung hauptsächlich axial verpresst wird. Durch diese vorteilhafte Ausgestaltung wird eine Beschädigung des zweiten Dichtrings 42 durch Anlage an dem Außengewindeabschnitt 10 vermieden, so dass beliebig häufige Wiederholmontagen möglich sind.

Wie am Besten in Fig. 4 zu erkennen ist, sind die beiden Ringabschnitte 32, 34 des Zwischenrings 30 durch einen inneren, die beiden Dichtring-Aufnahmen 38, 40 voneinander abteilenden, radialen Ringsteg 46 getrennt. Dadurch ist jede Dichtring-Aufnahme 38, 40 von einer radialen Stufenfläche 48 bzw. 50 und einer außen angrenzenden, sich etwa konisch erweiternden Begrenzungsfläche 52 bzw. 54 gebildet.

Da der erste Dichtring 18 in der Aufnahmenut 20 liegt, hat er im montierten Zustand einen geringeren Durchmesser als der zweite, auf dem Außengewindeabschnitt 10 angeordnete Dichtring 42. Daher ist auch der erste Ringabschnitt 32 des Zwischenrings 30 im Durchmesser zumindest innen und vorzugsweise auch außen kleiner als der zweite Ringabschnitt 34 ausgebildet. Dadurch kann außenseitig eine radiale oder schräge (konische) Stufe 56 gebildet sein. Bevorzugt weisen aber die beiden Dichtringe 18, 42 vor der Montage die gleichen Abmessungen auf. Indem die zweite Dichtungskammer 44 bzw. die zweite Aufnahme 40 einen größeren Durchmesser als die erste Dichtungskammer 36 bzw. die erste Aufnahme 38 aufweist, wird der zweite Dichtring 42 bei der Montage so gedehnt, dass sich sein Ringquerschnitt definiert reduziert. Die bevorzugt außenseitig am Umfang des Zwischenringes 30 gebildete Stufe 56 läßt vorteilhafterweise für den Anwender leicht die Lagerrichtigkeit beim Aufsetzen des Zwischenringes 30 erkennen, wobei ein im Außendurchmesser kleinerer Abschnitt 58 gegen den Betätigungsansatz 12 zu richten ist und ein größerer Abschnitt 60 vom Betätigungsansatz 12 wegweisen muß (vgl. Fig.3).

Der erfindungsgemäße Zwischenring 30 ist weiterhin bezüglich seiner axialen Länge bzw. Dicke L in Abhängigkeit von der jeweiligen Normbohrung N derart bemessen, dass sowohl einerseits das Einschraubteil 2 zusammen mit dem bevorzugt daran gehalterten Halteringelement 24 vollständig bis zur notwendigen Verpressung des ersten Dichtringes 18 einschraubbar ist, als auch andererseits das zugehörige Steckerteil 4 vollständig bis in seine korrekte Steckposition in bzw. mit dem freien Ende durch die Durchgangsöffnung 6 des Einschraubteils 2 einsteckbar ist. Dabei sollte aber die Länge L auch derart etwa auf einen gerade notwendigen Mindestwert begrenzt werden, dass das Einschraubteil 2 mit seinem Außengewindeabschnitt 10 noch mit genügend tragenden Gewindegängen (bei Ausbildung aus Messing z. B. etwa drei) innerhalb der Gewindebohrung 14a sitzt.

Die Erfindung ist nicht auf die dargestellten und beschriebenen Ausführungsbeispiele beschränkt, sondern umfaßt auch alle im Sinne der Erfindung gleichwirkenden Ausführungen, die im Schutzumfang der Ansprüche liegen. Durch die Halterung des Halteringelementes. 24 an dem Einschraubteil 2 ist es beispielsweise auch möglich, das Stecksystem (2, 4) in eine Gewinde-Durchgangsbohrung z. B. einer Gehäusewandung einzusetzen, wobei das Halteringelement 24 frei in einen Innenraum ragt, denn es kann sich eine axiale Abstützung z. B. über eine Stufenfläche beim Einstecken des Steckerteils 4 erübrigen. Der erfindungsgemäße Zwischenring 30 kann vorteilhafterweise weiterhin auch beim Einschrauben von Stutzen nach ISO 4039-2 und/oder Stutzen nach ISO 6149-3 in Bohrungen nach DIN 3852-1 und -2 eingesetzt werden.

## Patentansprüche

1. Fluid-Stecksystem mit einem Einschraubteil (2) mit einer Durchgangsöffnung (6) zum Einstecken eines Steckerteils (4), einem Außengewindeabschnitt (10) zum Einschrauben in eine Gewindebohrung (14, 14a) eines Basisteils (16, 16a), einem flanschartig vergrößerten, insbesondere als Außensechskant ausgebildeten Betätigungsansatz (12) sowie einer im Übergang zwischen dem Betätigungsansatz (12) und dem Außengewindeabschnitt (10) gebildeten Aufnahmenut (20) mit einem Dichtring (18),
**gekennzeichnet durch** einen Adapter-Zwischenring (30), der auf den Außengewindeabschnitt (10) aufsetzbar ist und zwei axial gegenüberliegende Ringabschnitte (32, 34) aufweist, und zwar einen ersten Ringabschnitt (32), der auf der dem Betätigungsansatz (12) zugewandten Seite eine gemeinsam mit der Aufnahmenut (20) und dem Betätigungsansatz (12) eine erste Dichtungskammer (36) für den ersten Dichtring (18) bildende erste Aufnahme (38) aufweist, sowie einen zweiten Ringabschnitt (34), der eine zweite Aufnahme (40) für einen zweiten Dichtring (42) derart aufweist, dass bei Einschrauben des Einschraubteils (2) in eine eine mündungsseitig angrenzende, ebene Umgebungsfläche (26) aufweisende Basisteil-Gewindebohrung (14a) zwischen der zweiten Aufnahme (40), der ebenen Umgebungsfläche (26) und dem Außengewindeabschnitt (10) eine zweite Dichtungskammer (44) für den zweiten Dichtring (42) gebildet ist, wobei der Zwischenring (30) eine in Abhängigkeit von der jeweiligen Basisteil-Gewindebohrung (14a) derart bemessene axiale Länge bzw. Dicke (L) aufweist, dass sowohl einerseits das Einschraubteil (2) vollständig bis zur notwendigen Verpressung des ersten Dichtringes (18) einschraubbar ist, als auch andererseits ein zugehöriges Steckerteil (4) vollständig bis in eine korrekte Steckposition in bzw. **durch** die Durchgangsöffnung (6) des Einschraubteils (2) einsteckbar ist.

2. Stecksystem nach Anspruch 1,
**dadurch gekennzeichnet, dass** die beiden Dichtring-Aufnahmen (38, 40) des Zwischenrings (30) und die zugehörigen Dichtringe (18, 42) derart ausgelegt sind, dass im montierten Zustand eine optimale Verpressung beider Dichtringe (18, 42) erreicht wird und dabei der zweite Dichtring (42) im Wesentlichen ohne radiale, gegen den Außengewindeabschnitt (10) wirkende Verformung hauptsächlich axial verpresst wird.

3. Stecksystem nach Anspruch 1 oder 2,
**dadurch gekennzeichnet, dass** die beiden Ringabschnitte (32, 34) des Zwischenrings (30) durch einen inneren, die beiden Dichtring-Aufnahmen (38, 40) voneinander abteilenden radialen Ringsteg (46) getrennt sind.

4. Stecksystem nach einem der Ansprüche 1 bis 3,
**dadurch gekennzeichnet, dass** jede Dichtring-Aufnahme (38, 40) des Zwischenrings (30) von einer radialen Stufenfläche (48, 50) und einer außen angrenzenden, sich etwa konisch erweiternden Begrenzungsfläche (52, 54) gebildet ist.

5. Stecksystem nach einem der Ansprüche 1 bis 4,
**dadurch gekennzeichnet, dass** dasEinschraubteil(2) zusammen mit daran gehalterten Zusatzteilen, wie insbesondere mit einem Stecker- Halteelement (24), in die Basisteil-Gewindebohrung (14a) einschraubbar ist.

6. Stecksystem nach einem der Ansprüche 1 bis 5,
**dadurch gekennzeichnet, dass** der erste Ringabschnitt (32) des Zwischenrings (30) im Durchmesser kleiner als der zweite Ringabschnitt (34) ausgebildet ist.

7. Stecksystem nach einem der Ansprüche 1 bis 6,
**gekennzeichnet durch** eine Ausbildung des Zwischenrings (30) als Drehteil aus Metall, insbesondere Messing.

## Claims

1. A fluid plug-in system having a screw-in part (2) with a through opening (6) for the insertion of a plug part (4), an externally threaded portion (10) for screwing into a tapped bore (14, 14a) of a base part (16, 16a), an operating shoulder (12), enlarged in a flange-like manner and in particular in the form of a hexagon head, as well as a receiving groove (20), formed in the transition between the operating shoulder (12) and the externally threaded portion (10), with a sealing ring (18), **characterised by** an adapter intermediate ring (30) which is able to be placed on the externally threaded portion (10) and which has two axially opposite ring portions (32, 34), namely a first ring portion (32) having, on the side facing the operating shoulder (12), a first receiver (38) which together with the receiving groove (20) and the operating shoulder (12) forms a first sealing chamber (36) for the first sealing ring (18) and a second ring portion (34) which has a second receiver (40) for a second sealing ring (42) in such a manner that upon screwing of the screw-in part (2) into a base-part tapped bore (14a), having a plane circumferential surface (26) adjoining at the mouth side, a second sealing chamber (44) for the second sealing ring (42) is formed between the second receiver (40), the plane circumferential surface (26) and the externally threaded portion (10), wherein the intermediate ring (30) has an axial length or thickness (L) calculated dependent on the respective base-part tapped bore (14a) such that, on the one hand, the screw-in part (2) can be screwed in completely until the necessary compressing of the first sealing ring (18) and, on the other hand, an associated plug part (4) is completely insertable into or through the through opening (6) of the screw-in part (2) into a correct plug-in position.

2. A plug-in system according to claim 1, **characterised in that** the two sealing-ring receivers (38, 40) of the intermediate ring (30) and the associated sealing rings (18, 42) are designed in such a manner that an optimal compression of both sealing rings (18, 42) is achieved in the mounted state and in the process the second sealing ring (42) is mainly compressed axially in a manner substantially without deformation which is radial and which acts against the externally threaded portion (10).

3. A plug-in system according to claim 1 or 2, **characterised in that** the two ring portions (32, 34) of the intermediate ring (30) are separated by an inner, radial ring bar (46) separating the two sealing-ring receivers (38, 40) from one another.

4. A plug-in system according to any one of claims 1 to 3, **characterised in that** each sealing-ring receiver (38, 40) of the intermediate ring (30) is formed by a radial stepped surface (48, 50) and an externally adjoining, substantially conically widening boundary surface (52, 54).

5. A plug-in system according to any one of claims 1 to 4, **characterised in that** the screw-in part (2) together with additional parts secured thereon, such as in particular together with a plug holding element (24), can be screwed into the base-part tapped bore (14a).

6. A plug-in system according to any one of claims 1 to 5, **characterised in that** the first ring portion (32) of the intermediate ring (30) is smaller in diameter than the second ring portion (34).

7. A plug-in system according to any one of claims 1 to 6, **characterised by** the intermediate ring (30) being constructed as a turned part made of metal, in particular brass.

## Revendications

1. Système enfichable pour fluide comprenant une partie enfichable (2) avec une ouverture de passage (6) pour l'enfichage d'une partie enfichable (4), une portion de filetage extérieur (10) pour le vissage dans un alésage fileté (14, 14a) d'une partie de base (16, 16a), un rebord d'actionnement (12) agrandi en forme de bride, conçu en particulier sous la forme d'un hexagone extérieur et une rainure de logement (20) formée dans la transition entre le rebord d'actionnement (12) et la portion de filetage extérieur (10) avec une bague d'étanchéité (18),
**caractérisé par** une bague intermédiaire d'adaptation (30) qui peut être posée sur la portion de filetage extérieur (10) et présente deux portions de bague (32, 34) opposées axialement, à savoir une première portion de bague (32) qui présente sur le côté tourné vers le rebord d'actionnement (12) un premier logement (38) formant conjointement avec la rainure de logement (20) et le rebord d'actionnement (12) une première chambre d'étanchéité (36) pour la première bague d'étanchéité (18), et une seconde portion annulaire (34), qui présente un second logement (40) pour une seconde bague d'étanchéité (42) de telle sorte que, lors du vissage de la partie vissable (2) dans un alésage fileté de partie de base (14a) présentant une surface environnante (26) plane et contiguë côté débouché, une seconde chambre d'étanchéité (44) pour la seconde bague d'étanchéité (42) est formée entre le second logement (40), la surface environnante (26) plane et la portion de filetage extérieur (10), la bague intermédiaire (30) présentant une longueur ou épaisseur (L) axiale dimensionnée en fonction de l'alésage fileté de la partie de base (14a) respectif, de telle sorte que d'une part la partie vissable (2) peut être vissée complètement jusqu'à la compression nécessaire de la première bague d'étanchéité (18) et d'autre part également une partie enfichable (4) spécifique peut être enfichée complètement jusque dans une position d'enfichage correcte dans ou au travers de l'ouverture de passage (6) de la partie vissable (2).

2. Système enfichable selon la revendication 1,
**caractérisé en ce que** les deux logements de bague d'étanchéité (38, 40) de la bague intermédiaire (30) et les bagues d'étanchéité (18, 42) spécifiques sont conçus de telle sorte que, dans l'état monté, on obtient une compression optimale des deux bagues d'étanchéité (18, 42) et la seconde bague d'étanchéité (42) est comprimée principalement axialement essentiellement sans déformation radiale agissant contre la portion de filetage extérieur (10).

3. Système enfichable selon la revendication 1 ou 2,
**caractérisé en ce que** les deux portions de bague (32, 34) de la bague intermédiaire (30) sont séparées par une barrette annulaire (46) radiale, intérieure, séparant les deux logements de bague d'étanchéité (38, 40) l'un de l'autre.

4. Système enfichable selon l'une quelconque des revendications 1 à 3,
**caractérisé en ce que** chaque logement de bague d'étanchéité (38, 40) de la bague intermédiaire (30) est formé par une surface étagée (48, 50) radiale et une surface de délimitation (52, 54) contiguë extérieurement et s'élargissant à peu près en forme de cône.

5. Système enfichable selon l'une quelconque des revendications 1 à 4,
**caractérisé en ce que** la partie vissable (2) peut être vissée conjointement avec des parties supplémentaires fixées dessus, comme en particulier avec un élément de retenue à fiche (24), dans l'alésage fileté de la partie de base (14a).

6. Système enfichable selon l'une quelconque des revendications 1 à 5,
**caractérisé en ce que** la première partie annulaire (32) de la bague intermédiaire (30) est conçue avec un diamètre inférieur à la seconde portion de bague annulaire (34).

7. Système enfichable selon l'une quelconque des revendications 1 à 6,
**caractérisé par** une conception de la bague intermédiaire (30) sous la forme d'une partie rotative en métal, en particulier en laiton.
